# EUROPÄISCHE PATENTSCHRIFT

(11) **EP 2 245 384 B1**
(45) Veröffentlichungstag und Bekanntmachung des Hinweises auf die Patenterteilung: **21.12.2011**
(21) Anmeldenummer: 08785401.4
(22) Anmeldetag: 07.08.2008
(51) Int. Cl.: F24J 2/38, F24J 2/54, G05B 13/00, G05D 3/10

(54) **SELBSTLERNENDE SONNENKOLLEKTORNACHFÜHRSTEUERUNG**
SELF-LEARNING SOLAR COLLECTOR ORIENTATION CONTROL SYSTEM
COMMANDE D'AJUSTEMENT DE CAPTEUR SOLAIRE À AUTO-APPRENTISSAGE

(30) Priorität: 28.02.2008 DE 102008011547
(43) Veröffentlichungstag der Anmeldung: 03.11.2010
(73) Patentinhaber: Flagsol GmbH, 50678 Köln (DE)
(72) Erfinder: NAVA, Paul, 53844 Troisdorf (DE)
(74) Vertreter: Viering, Jentschura & Partner
(86) Internationale Anmeldenummer: PCT/EP2008/006491
(87) Internationale Veröffentlichungsnummer: WO 2009/106104

(56) Entgegenhaltungen:
- WO-A-2005/116534
- WO-A-2007/022756
- FR-A- 2 340 576
- US-A- 4 564 275
- US-A1- 2005 274 376

## Beschreibung

Die Erfindung richtet sich auf ein Verfahren zur Nachführsteuerung eines Sonnenkollektors und/oder mehrerer in Reihe angeordneter Sonnenkollektoren, insbesondere Parabolrinnenkollektoren, mit jeweils in der Brennlinie angeordnetem Wärmesammelelement, wobei die Temperatur und/oder die gesammelte Wärmemenge des das Wärmesammelelement durchströmenden Wärmeübertragungsmediums im Bereich eines jeden Sonnenkollektors diesem zuordenbar gemessen wird und die ermittelten Temperaturwerte und/oder Wärmemengenwerte einer die Nachführung des jeweiligen Sonnenkollektors steuernden Steuereinheit zugeführt werden, die den jeweiligen Sonnenkollektor im Rahmen eines festgelegten Nachführparameters, insbesondere eines Nachführbereiches und/oder Nachführhubes, der Sonne nachführt. Die Erfindung richtet sich weiterhin auf ein ebensolches Verfahren, bei welchem mehrere in Reihe angeordnete Sonnenkollektoren zusammenwirken.

Solarthermische Kraftwerke nutzen die von der Sonne über einen Absorber eingefangene und von einem Wärmeträgermedium, das in dem Absorber fließt, aufgefangene Energie. Die von der Sonne abgegebenen Wärme wird somit als primäre Energiequelle genutzt. Hierbei besteht das Konzept solarthermischer Kraftwerke mit Bündelung der Direktstrahlung darin, die Direktstrahlung der Sonne mit Reflektoren auf einen Solarabsorber zu bündeln. Diese Kraftwerke verwenden konzentrierende Reflektorflächen, um das einfallende Sonnenlicht auf den Absorber zu bündeln. Die Reflektoren und der Absorber werden der Sonne nachgeführt. Das Kollektorfeld eines Solarfarmkraftwerkes besteht dabei üblicherweise aus vielen, parallel und/oder in Reihe geschaltete Parabolrinnenkollektoren. Parabolrinnenkollektoren bestehen aus gewölbten Spiegeln, die das Sonnenlicht auf ein in der Brennlinie verlaufendes Absorberrohr bündeln. Die Länge solcher Kollektoren liegt je nach Bautyp zwischen 20 und 200 m. In den Absorberrohren wird die konzentrierte Sonnenstrahlung in Wärme umgesetzt und an ein zirkulierendes Wärmeträgermedium abgegeben. Die Parabolrinnen werden aus Kostengründen meist nur einachsig der Sonne nachgeführt. Sie sind deshalb in Nord-Süd-Richtung angeordnet und werden der Sonne im Tagesverlauf von Ost nach West nachgeführt. Diese Nachführung kann zeitgesteuert, aber auch mittels eines Sonnensensors gesteuert durchgeführt werden. Die eine Länge von bis zu 200 m aufweisenden einzelnen Kollektoren bestehen aus mehreren strömungstechnisch hintereinander angeordneten Segmenten. Jedem Kollektor ist jeweils ein Antrieb zu seiner Nachführung, eine Temperaturmessung, eine Einrichtung zur Bestimmung des Sonnenstandes und ein Orientierungsdetektor zugeordnet. Die Kollektoren werden im Tagesverlauf der Sonne nachgeführt. Dies erfolgt entweder über einen lichtempfindlichen Sensor, der Informationen über die Stellung des Kollektors relativ zur Position der Sonne liefert, oder über einen Algorithmus, der die Sonnenstellung berechnet und einen Positionssensor, der die Kollektorposition liefert. Die Nachführung eines Sonnenkollektors ist dann optimal, wenn die in seiner Erstreckung von dem Wärmeträgermedium aufgenommene Wärmemenge maximal ist.

Es bestehen aber Probleme, die Nachführung und die Ausrichtung der Sonnenkollektoren optimal zu gestalten. Aufgrund der baulichen Größe und der damit verbundenen mechanischen Belastungen bei der Verstellung der Kollektoren ist es schwer, diese optimal zueinander auszurichten. Die optimale Ausrichtung ist geometrisch nicht erfassbar, da in der Regel die Spiegelelemente eines Sonnenkollektors nicht alle genau auf die Brennlinie und die verschiedenen Segmente eines Kollektors nicht optimal zueinander ausgerichtet sind. Ferner kann sich die Ausrichtung der Sensoren, sowohl des Sonnensensors als auch des (Winkel-)Positionssensors relativ gegenüber dem jeweils zugeordneten Sonnenkollektor verschieben. Auch ist deren initiale und ursprüngliche Ausrichtung nicht in jedem Falle optimal. Schließlich ist bei den relativ langen, einzelnen Segmenten eines Kollektors bei deren einachsiger Nachführung um die Längsachse ein beträchtliches Gewicht zu bewegen, so dass bei der Nachführbewegung eine Torsion und damit Verwindung eines Segmentes um seine Längsachse auftritt, wodurch die Relativposition der einzelnen Spiegel zur Brennlinie und dem darin angeordneten Absorber verändert wird.

Diese Probleme und Nachteile führen dazu, dass die einzelnen in Reihe geschalteten Sonnenkollektoren eines Stranges oder Kreislaufelementes nicht jeweils optimal zur Sonne ausgerichtet und im Tagesverlauf der Sonne nachgeführt werden. Die Auswertung der jeweils erfassten Sensorsignale und die Berechnung der Nachführposition gibt nicht die optimale Stellung des jeweiligen gesamten Sonnenkollektors wieder. Die geometrische Bestimmung der optimalen Kollektorposition ist praktisch nur näherungsweise möglich.

Aus der WO 2005/116534 A2 ist ein Verfahren zur Nachsteuerung eines Sonnenkollektors mit jeweils in der Brennlinie angeordnetem Wärmesammelelement bekannt, wobei die Temperatur des das Wärmesammelelement durchströmenden Wärmeträgermediums im Bereich eines jeden Sonnenkollektors diesem zuordenbar gemessen wird und die ermittelten Temperaturwerte und/oder Wärmemengenwerte einer die Nachführung des jeweiligen Sonnenkollektors steuernden Steuereinheit zugeführt werden, die den jeweiligen Sonnenkollektor im Rahmen eines festgelegten Nachführparameters der Sonne nachführt. Hierbei wird die Ausrichtung des Kollektors anhand von Solarzellen ermittelt. Im Falle einer Abweichung vom Sollwert wird die Orientierung des Kollektors durch Stellmotore entsprechend angepasst, die neue Position wird gespeichert.

Der Erfindung liegt demgegenüber die Aufgabe zugrunde, eine Lösung zu schaffen, die eine verbesserte Nachführung eines Sonnenkollektors ermöglicht.

Bei einem Verfahren der eingangs bezeichneten Art wird diese Aufgabe erfindungsgemäß dadurch gelöst, dass das Verfahren die folgenden Schritte umfasst:
a) Ermitteln der im jeweiligen Sonnenkollektor gesammelten Wärmemenge;
b) Verändern eines Nachführparameters des jeweiligen Sonnenkollektors um ein Inkrement in Richtung der oder ein Dekrement entgegengesetzt zur Sonnenbewegung;
c) Vergleichen der im Schritt a) gesammelten Wärmemenge mit der nach Durchführung des Schrittes b) im jeweiligen Sonnenkollektor gesammelten Wärmemenge und
d) bei im Schritt c) relativ zur im Schritt a) ermittelten Wärmemenge festgestellter erhöhter Wärmemenge Speichern des um das Inkrement oder das Dekrement geänderten Nachführparameters als neuen Sollwert für die Nachführsteuerung des jeweiligen Sonnenkollektors in der Steuereinheit.

Ebenso wird diese Aufgabe bei einem Verfahren der eingangs bezeichneten Art, bei welchem ferner mehrere in Reihe angeordnete Sonnenkollektoren zusammenwirken dadurch gelöst, dass das Verfahren die folgenden Schritte umfasst:
a1) Ermitteln eines gleitenden Mittelwertes einer ersten, einem ersten Sonnenkollektor zugeordneten Temperaturdifferenz des Wärmeträgermediums zwischen einem ersten und einem zweiten Temperaturmesspunkt;
a2) Ermitteln eines gleitenden Mittelwertes einer zweiten, einem anderen Sonnenkollektor zugeordneten Temperaturdifferenz des Wärmeträgermediums zwischen zwei Temperaturmesspunkten, wovon mindestens einer unterschiedlich zum ersten und/oder zweiten Temperaturmesspunkt ist;
b1) Verändern des Nachführparameters, insbesondere des Nachführbereiches und/oder des Nachführhubes, des ersten Sonnenkollektors um ein Inkrement in Richtung der oder ein Dekrement entgegengesetzt zur Sonnenbewegung;
c1) Vergleichen der sich danach einstellenden leitenden Mittelwerte von erster und zweiter Temperaturdifferenz und
d1) bei relativ zum gleitenden Mittelwert der zweiten Temperaturdifferenz erhöhtem gleitendem Mittelwert der ersten Temperaturdifferenz Speichern des um das Inkrement oder das Dekrement geänderten Nachführparameters, insbesondere Nachführbereiches und/oder Nachführhubes, als neuen Sollwert für die Nachführsteuerung des ersten Sonnenkollektors in der Steuereinheit.

Ausgestaltungen und Weiterbildungen der Erfindung ergeben sich aus den Unteransprüchen.

Mit dem erfindungsgemäßen Verfahren ist es möglich, während des Betriebes eine relative Leistungsmessung des jeweiligen Sonnenkollektors oder der in Reihe geschalteten Sonnenkollektoren eines Kollektorstranges oder eines Kreislaufelementes durchzuführen und kollektorspezifische, d.h. jedem einzelnen von gegebenenfalls mehreren Sonnenkollektoren zugeordnete Korrekturwerte für die Nachführsteuerung zu ermitteln und auf diese Weise jeden Sonnenkollektor einzeln möglichst optimal nachzuführen. Durch Variation der Nachführparameter, insbesondere des Nachführbereiches und/oder des Nachführhubes, eines (jeden) Kollektors unter ansonsten konstanten Betriebsbedingungen und durch Vergleich der sich dann einstellenden Änderungen der im jeweiligen Kollektor gesammelten Wärmemenge, insbesondere Vergleich der Änderungen eines gleitenden Mittelwertes einer Temperaturdifferenz oder mehrerer Temperaturdifferenzen relativ zueinander, werden die Nachführparameter optimiert. Hierbei wird in dem Falle, dass der Vergleichswert für die Änderung der Wärmemenge ansteigt, der Nachführparameter als neuer Sollwert für die Nachführsteuerung in der Steuereinheit gespeichert. Sollte der Vergleich der Änderungen einen gegenüber dem Ausgangsswert niedrigeren Vergleichswert ergeben, so wird der Nachführparameter gegenüber der Ausgangslage um ein Inkrement oder ein Dekrement in die entgegengesetzte Richtung verstellt, d.h. gegenüber der bereits geänderten Position um zwei Inkremente oder zwei Dekremente in die entgegengesetzte Richtung verstellt. Zeigt sich bei dem nun erfolgenden Vergleich zu dem ursprünglichen Ausgangswert ebenfalls keine Veränderung der Wärmemenge oder des gleitenden Mittelwertes einer Temperaturdifferenz, so wird der Nachführparameter oder werden die Nachführparameter auf die ursprünglichen Ausgangswerte zurückgestellt. Hierdurch wird eine Reihenfolge und Abfolge von Regelschritten festgelegt, die dazu führt, dass der jeweilige Sonnenkollektor oder bei einer Mehrzahl von in Reihe geschalteten Sonnenkollektoren jeder einzelne Sonnenkollektor jeweils optimal zur Sonne ausgerichtet und dem Sonnenverlauf des Tages nachgeführt wird. Bei mehreren, in Reihe geschalteten Sonnenkollektoren wird dieses Optimierungsverfahren im Vergleich zwischen einem Sonnenkollektor, dessen Nachführparameter unverändert bleibt und einem Sonnenkollektor, dessen Nachführparameter verändert wird, ermittelt. Wenn mehrere Sonnenkollektoren seriell zu einem Kreislaufelement in Reihe zusammengefasst sind, wird das Optimierungsverfahren nachfolgend für jeden einzelnen Sonnenkollektor des Kreislaufelementes wiederholt. Die jeweils optimierten Nachführparameter werden von der Kollektorsteuerung übernommen, d.h. hier gespeichert und mittels eines Mikroprozessors und/oder einer Fuzzy-Logik verarbeitet. Die Nachführsteuerung startet einen jeweiligen Optimierungszyklus entweder zeitgesteuert oder durch den Sonnensensor gesteuert. Sobald die festgelegte Zeitperiode verstrichen ist oder der Sonnensensor eine festgelegte Weiterbewegung der Sonne auf ihrer Tageslaufbahn anzeigt, variiert die Nachführsteuerung den jeweiligen Nachführparameter, d.h. insbesondere den Nachführbereich und/oder den Nachführhub eines jeweiligen angeschlossenen Sonnenkollektors. Insbesondere werden der Nachführhub und die Mittelposition des Sonnenkollektors verändert und die Steuereinheit ermittelt aus der sich dann einstellenden Änderung des Wärmeflusses oder die Wärmemenge die aktuelle Nachführstrategie im Sinne der vorstehend beschriebenen Vorgehensweise, die dann für den jeweiligen Sonnenkollektor und die jeweilige aktuelle Einstrahlungsbedingung optimal ist. Auf diese Weise wird eine selbstlernende Nachführsteuerung geschaffen. Aufgrund der sich über den Tagesverlauf mehrfach wiederholenden Durchführung dieses Steuerungszyklusses ist der jeweilige Sonnenkollektor auch über den Tagesverlauf optimal zur Sonne ausgerichtet.

Die Erfindung ist nachstehend anhand einer Zeichnung und eines Ausführungsbeispiels näher erläutert. Diese zeigt in
- Fig. 1: in schematischer Darstellung einen Sonnenkollektor,
- Fig. 2: in schematischer Darstellung die dem Sonnenverlauf von Ost nach West folgende Nachführung eines Sonnenkollektors,
- Fig. 3: in schematischer Darstellung ein aus vier Sonnenkollektoren bestehendes Kreislaufelement mit vier Temperaturmessstellen und in

- Fig. 4: ein aus vier Sonnenkollektoren bestehendes Kreislaufelement mit fünf Temperaturmessstellen.

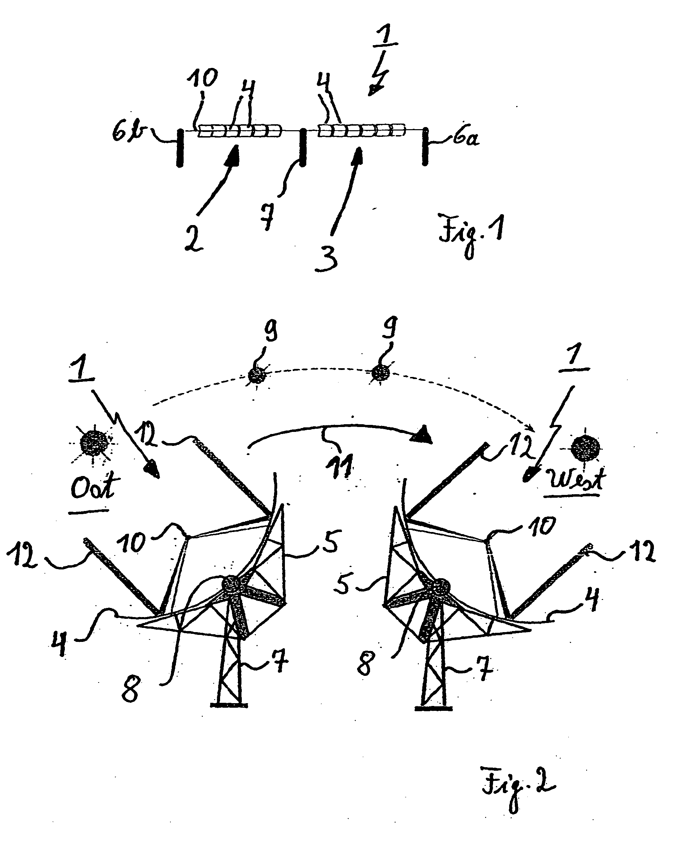

Der in Fig. 1 und 2 insgesamt mit 1 bezeichnete Sonnenkollektor besteht aus zwei Segmenten 2,3 die ihrerseits jeweils sechs Reflektorelemente 4 mit je achtundzwanzig Spiegeln umfassen. Insgesamt weist der Kollektor 1 somit zwölf Reflektorelemente 4 auf. Diese sind jeweils starr auf einem verwindungssteifen Rahmen 5 befestigt. Jedes Segment 2,3 ist auf einer Stütze gelagert. Dabei bilden die äußeren Stützen Endstützen 6a,6b und die mittlere Stütze eine Antriebsstütze 7 aus. Die Antriebsstütze 7 weist eine eine Hydraulikeinheit umfassende Antriebseinheit auf, die den gesamten Kollektor 1 einachsig um seine Längsachse 8 verschwenkend der Sonne 9 auf ihrem Tagesverlauf von Ost nach West folgend nachfährt, wie dies schematisch in Figur 2 dargestellt ist. In der Brennlinie aller möglichst gleich zueinander ausgerichteten Reflektorelemente 4 ist ein Absorber 10 als Wärmesammelelement ausgebildet und angeordnet. Der Absorber oder das Wärmesammelelement 10 wird von einem Wärmeträgermedium durchströmt und im Laufe des Tages in Richtung des Pfeiles 11 derart der Sonne nachgeführt, dass die Sonnenstrahlung möglichst jederzeit direkt entsprechend dem in Fig. 2 schematisch dargestellten Sonnenstrahleinfall 12 stattfindet und somit zu jeglichem Zeitpunkt im Verlauf eines Tages durch die Direkteinstrahlung der Sonne eine möglichst große Wärmemenge auf das in dem Absorber/Wärmesammelelement 10 fließende Wärmeträgermedium übertragen wird.

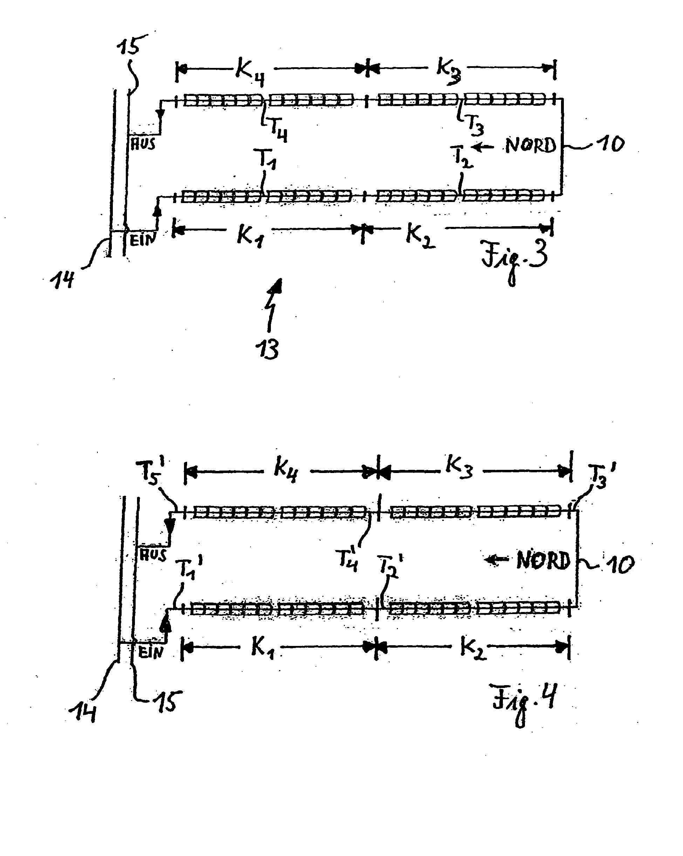

Die Nachführung erfolgt mithilfe einer Nachführsteuerung. Diese Nachführsteuerung erhält Eingangssignale von Sonnensensoren, Winkelpositionssensoren und Temperatursensoren, die jedem einzelnen Sonnenkollektor 1 zugeordnet sind. Der jeweilige Sonnensensor und der jeweilige Winkelpositionssensor sind der Antriebseinheit zugeordnet und in der Regel auf der Antriebsstütze 7 angeordnet. Ebenso ist dort eine Temperaturmessstelle des jeweiligen Sonnenkollektors 1 angeordnet. Wie aus dem Ausführungsbeispiel nach der Figur 4 ersichtlich ist, ist es aber auch möglich, Temperaturmesssensoren vor und hinter jedem Sonnenkollektor 1 vorzusehen, wenn diese in Form eines Kreislaufelementes seriell in Reihe geschaltet bzw. angeordnet sind.

Ein üblicher Sonnensensor besteht beispielsweise aus zwei nebeneinander angeordneten Photovoltaikzellen, die derart an dem jeweiligen Sonnenkollektor 1 angeordnet sind, dass der Absorber 10 bei Sonneneinstrahlung einen Schatten auf die beiden Photovoltaikzellen wirft. Hierbei ist der Sonnensensor nun idealer Weise so ausgerichtet und wird er - zusammen mit den Segmenten 2,3 und den Reflektorelementen 4 - dem Sonnenverlauf derart nachgeführt, dass sich der Schattenwurf gleichmäßig auf beide Photovoltaikzellen verteilt, also eine minimale Differenzspannung zwischen den beiden einzelnen Solar-/Photovoltaikzellen des Sonnenkollektors auftritt. Sobald sich nun die Sonne weiterbewegt und sich die Differenzspannung ändert und einen bestimmten, festgelegten Wert erreicht, wird ein Nachführungszyklus von der dem jeweiligen Sonnenkollektor 1 zugeordneten Steuereinheit durchgeführt. Die Steuereinheit erfasst und verarbeitet die von dem Winkelpositionssensor erhaltenen Signale, mit welchen die Winkelstellung der Segmente 2,3 und damit des jeweiligen Sonnenkollektors 1 in Bezug auf die vertikale Längsachse der Stützen 6a,6b und 7 erfasst wird. Hierbei stellt die Position, in der sich die konkave Spiegelfläche vollständig nach Osten ausrichtet, die 0° Position, die gegenüberliegende vollständige Ausrichtung nach Westen die 180° Position und die dazwischen liegenden annähernd waagerechte Ausrichtung der Reflektorelemente 4 die 90° Position dar.

In den Figuren 3 und 4 ist jeweils ein aus vier Kollektoren K₁, K₂, K₃ und K₄ bestehendes Kreislaufelement 13 eines solarthermischen Kraftwerkes dargestellt. Als Wärmeträgermedium durchströmt beispielsweise Thermoöl den Absorber/das Wärmesammelelement 10 des Kreislaufelementes 13 von einem kalten Verteiler 14 zu einem heißen Sammler 15. In einem thermischen Solarkraftwerk oder solarthermischen Kraftwerk sind mehrere dieser Kreislaufelemente 13 parallel geschaltet und jeweils mit dem kalten Verteiler 14 und dem heißen Sammler 15 verbunden. Die Solarkollektoren eines jeden dieser Kreislaufelemente 13 besitzen jeweils immer denselben Massendurchfluss.

In den Ausführungsbeispielen nach der Fig. 3 und 4 ist jeweils ein Kreislaufelement 13 dargestellt, das aus vier Sonnenkollektoren K₁, K₂, K₃ und K₄ besteht. Der wesentliche Unterschied besteht darin, dass beim Ausführungsbeispiel nach der Fig. 3 die Temperatursensoren T₁, T₂, T₃ und T₄ vorgesehen sind, die jeweils in der Mitte eines jeden Kollektors K₁, K₂, K₃ und K₄ zwischen den jeweiligen beiden Segmenten 2 und 3 angeordnet sind und dort die Temperatur des Wärmeträgermediums erfassen, während beim Ausführungsbeispiel nach der Fig. 4 sich die Temperaturmessstellen T'₁, T'₂, T'₃, T'₄ und T'₅ hingegen jeweils vor und/oder hinter einem Sonnenkollektor K₁, K₂, K₃ und K₄ befinden.

Da sich die Sonne im Tagesverlauf kontinuierlich weiterbewegt, ändert sich das vom Sonnensensor an die Steuereinheit abgegebene Signal bei unbewegtem Sonnenkollektor kontinuierlich. Dieses Signal und damit die relative Position des jeweiligen Sonnenkollektors zur Sonne kann durch eine Gradzahl, eine Signalspannung oder aber auch durch eine Zeitspanne wiedergegeben werden. Auf diesen jeweils ausgewählten oder auch mehreren dieser ausgewählten Werte beruht dann der zur Nachführung des jeweiligen Sonnenkollektors verwendete Nachführparameter. Hierbei erfolgt nicht bei jeder Veränderung des Signals eine Nachführung, sondern nur dann, wenn sich das Signal aus einem "Nachführfenster" heraus- oder in ein solches hineinbewegt. Im Rahmen der nachstehend beschriebenen selbstlernenden Optimierung bzw. selbst lernenden Nachführsteuerung wird dieses "Nachführfenster" jeweils um ein Inkrement oder ein Dekrement verstellt oder verschoben, wobei im Ausführungsbeispiel ein einzelner Schritt oder ein Inkrement/Dekrement eine Verschiebung um 0,5 Grad bedeutet.

Die Optimierungssequenz des Nachführsteuerungszyklus wird nur dann durchgeführt, wenn sich das Solarfeld, d.h. das Kreislaufelement 13, in einem Zeitintervall von quasi stationärem Zustand befindet. Dies ist dann der Fall, wenn Sonneneinstrahlung und Massenstrom in dem jeweils nachzuführenden Kollektor K₁, K₂, K₃ oder K₄ hinreichend konstant sind, was durch eine Meteostation des Solarkraftwerkes und die übergeordnete Solarfeldsteuerung überprüft wird. In einem solchen Falle zeigen alle den jeweiligen Sonnenkollektoren K₁, K₂, K₃ und K₄ zugeordneten Sonnensensoren eine Differenzspannung an, die im "Nachführfenster" liegt. Die von dem Temperatursensoren gemessenen Temperaturen und Temperaturdifferenzen T₂-T₁, T₃-T₂ und T₄-T₃ werden kontinuierlich als gleitender Mittelwert erfasst.

Bei Initiierung des Nachsteuerungsoptimierungszyklus wird nun die Mittelposition des "Nachführfensters" des in diesem Falle ersten Solarkollektors K₁ um einen Schritt von 0,5 Grad zum Beispiel in Richtung Westen verschoben. Dadurch ist der in diesem Falle erste Kollektor K₁ damit gegenüber seiner vorhergehenden Ausrichtung um ein Inkrement von 0,5 Grad in Richtung Westen, d.h. um einen solchen 0,5°-Schritt mehr in Richtung Westen ausgerichtet.

Wenn der nun wiederum gemessene gleitende Mittelwert der Temperaturdifferenz T₂-T₁ relativ zu einem und/oder beiden ebenfalls gemessenen gleitenden Mittelwerten der Temperaturdifferenzen T₃-T₂ und T₄-T₃ ansteigt, dann bedeutet dies, dass von dem Wärmeträgermedium im Kollektor K₁ eine höhere Wärmemenge gesammelt wird, also die Sonneneinstrahlung besser ausgenutzt wird. Dies wird als optimale Position von der Steuereinheit interpretiert und das um diese 0,5 Grad nach Westen verschobene "Nachführfenster" wird als neuer Sollwert für den Solarkollektor K₁ abgespeichert

Falls bei dieser Maßnahme demgegenüber der gleitende Mittelwert der Temperaturdifferenz von T₂-T₁ relativ zu den gleitenden Mittelwerten der Temperaturdifferenzen T₃-T₂ und/oder T₄-T₃ sinkt, wird das Nachführfenster in die entgegen gesetzte Richtung, und zwar um zwei Dekremente, d.h. um zwei 0,5-Grad-Schritte und folglich um insgesamt ein Grad nach Osten verschoben. Das heißt, das Nachführfenster befindet sich nun in einer gegenüber der ursprünglichen Ausgangsposition um 0,5 Grad nach Osten verschobenen Position. Die gleitenden Mittelwerte der Temperaturdifferenzen T₂-T₁, T₃-T₂ und T₄-T₃ werden wiederum verglichen. Sollte sich nun bei dieser Einstellung herausstellen, dass der gleitende Mittelwert der Temperaturdifferenz von T₂-T₁ gegenüber den gleitenden Mittelwerten der Temperaturdifferenzen T₃-T₂ und/oder T₄-T₃ ansteigt, dann wird nun diese nach Osten verschobene Position des "Nachführfensters" als neuer Sollwert für den Sonnenkollektor K₁ in der Nachführsteuereinrichtung abgespeichert.

Sollte sich auch bei dieser zweiten Maßnahme herausstellen, dass sich wiederum keine Steigerung des gleitenden Mittelwertes der Temperaturdifferenz T₂-T₁ relativ zu den gleitenden Mittelwerten der Temperaturdifferenzen T₃-T₂ und/oder T₄-T₃ ergibt, dann wird keine Neuorientierung der Position des "Nachführfensters" durchgeführt, d.h. der ursprünglich in der Nachführsteuereinrichtung gespeicherte Sollwert für die Nachführsteuerung bleibt bestehen.

Bei dem vorstehend geschilderten Vorgehen wurde der Nachführbereich des Sonnenkollektors K₁ verstellt bzw. optimiert. Es wurde das gesamte "Nachführfenster" verstellt. Hierbei blieb aber der Nachführhub oder die Breite des "Nachführfensters", d.h. der Winkel, um den sich die Sonne weiterbewegt, bis man den Sonnenkollektor wieder nachstellt, unverändert, was einer Veränderung der "Fensterbreite" entspricht. Auch dieser Winkel entspricht wiederum einem Zeitintervall oder einer Signalgröße des Sonnensensors.

Auch diesbezüglich wird eine Optimierung entsprechend der vorstehend beschriebenen Vorgehensweise durchgeführt. Zur Optimierung des Nachführhubs wird wiederum bei einem quasi stationären Zustand für den Sonnenkollektor K₁ als erstem Sonnenkollektor das Nachführfenster für den Nachführhub, um z.B. 0,75 Grad vergrößert. Stellt sich bei dieser Vorgehensweise gegenüber den gleitenden Mittelwerten der Temperaturdifferenzen von T₃-T₂ und/oder T₄-T₃ bei dem nun ermittelten gleitenden Mittelwert der Temperaturdifferenz T₂-T₁ keine relativer Erhöhung des gleitenden Mittelwertes der Temperaturdifferenz T₂-T₁ ein, wird der Hub um die Mittelposition um 0,75 Grad als Dekrement erniedrigt. Sollte sich auch dann keine relative Erhöhung des gleitenden Mittelwertes der dem ersten Sonnenkollektor K₁ zugeordneten Temperaturdifferenz T₂-T₁ feststellen lassen, wird der alte Sollwert in der Steuereinheit für die Steuerung des Nachführhubes beibehalten. Sollte sich in einem der beiden Schritte jedoch eine Erhöhung der dem Solarkollektor K₁ zugeordneten Temperaturdifferenz ergeben, wird der dieser Temperaturdifferenz zugeordnete Nachführhubwert als neuer Sollwert in der Nachführsteuereinheit für den Sonnenkollektor K₁ abgespeichert.

Nachdem das und/oder die vorstehend beschriebenen Optimierungsverfahren für den Sonnenkollektor K₁ durchgeführt worden sind, werden diese Nachführsteuerungsoptimierungszyklen anschließend für die anderen Sonnenkollektoren K₂, K₃ und K₄ durchgeführt, wobei diese dann im Sinne der Erfindungsgegenstände dann jeweils zu dem ersten Sonnenkollektor werden bzw. als solcher behandelt und zugeordnet werden.

Bei der Optimierung des Kreislaufelementes 13 gemäß Ausführungsbeispiel nach Fig. 3 wird vorzugsweise insbesondere wie folgt vorgegangen:

Bei dem Sonnenkollektor K₁ als erstem Sonnenkollektor wird die relative Änderung des gleitenden Mittelwertes der Temperaturdifferenz von T₂-T₁ mit dem Vergleichswert der Temperaturdifferenz T₄-T₃ betrachtet.

Bei dem Sonnenkollektor K₂ als erstem Sonnenkollektor wird ebenfalls die Änderung des gleitenden Mittelwertes der Temperaturdifferenz T₂-T₁ im Vergleich zur Temperaturdifferenz T₄-T₃ betrachtet.

Im Falle des Sonnenkollektors K₃ als erstem Sonnenkollektor wird die Änderung des gleitenden Mittelwertes der Temperaturdifferenz T₄-T₃ im Vergleich zur Temperaturdifferenz T₂-T₁ betrachtet und im Falle des Sonnenkollektor K₄ als erstem Sonnenkollektor wird die Änderung des gleitenden Mittelwertes der Temperaturdifferenz T₄-T₃ im Vergleich zur Temperaturdifferenz T₂-T₁ betrachtet. Die Empfindlichkeit und Genauigkeit des Verfahrens kann dadurch erhöht werden, dass alternativ die Temperaturfühler bzw. Temperaturmesssensoren zwischen jeweils zwei Kollektoren positioniert werden, wodurch je Kreislaufelement 13 dann ein Temperatursensor mehr vorhanden ist. Dies ist im Ausführungsbeispiel nach der Fig. 4 dargestellt. Hier weist das Kreislaufelement 13 die Temperaturmessfühler und Temperaturmesspositionen T'₁, T'₂, T'₃, T'₄ und T'₅ auf. In diesem Fall wird bei dem Sonnenkollektor K₁ als erstem Sonnenkollektor die Änderung des gleitenden Mittelwertes der Temperaturdifferenz T'₂-T'₁, bei dem Sonnenkollektor K₂ als erstem Sonnenkollektor die Änderung des gleitenden Mittelwertes der Temperaturdifferenz T'₃-T'₂, im Falle des Sonnenkollektors K₃ als erstem Sonnenkollektor die Änderung des gleitenden Mittelwertes der Temperaturdifferenz T'₄-T'₃ und im Falle des Sonnenkollektors K₄ als erstem Sonnenkollektor die Änderung des gleitenden Mittelwertes der Temperaturdifferenz T'₅-T'₄ relativ zu mindestens einer der jeweils anderen Temperaturdifferenzen betrachtet und im Nachführungssteuerungsoptimierungszyklus ausgewertet.

Durch die Erfindung wird erreicht, dass jeweils der optimale Mittelwert der Orientierung des jeweiligen Kollektors. K₁ bzw. aller Kollektoren K₁ bis K₄ zur Sonne ermittelt wird, auch wenn die jeweils insgesamt zwölf Segmente 2,3 der vier Sonnenkollektoren K₁ bis K₄ zueinander oder in sich verstellt oder verdreht sind. Mithilfe des selbstlernenden Nachführsteuerungsverfahrens werden nicht exakt justierte Einstellungen der verschiedenen Sensoren, insbesondere der Sonnensensoren relativ zum jeweiligen Kollektor oder zu allen Kollektoren kompensiert. Der optimale Mittelwert der Orientierung der Kollektoren oder des jeweiligen Kollektors zur Sonne wird auch dann angesteuert, wenn sich die Segmente bei der Nachsteuerung oder dem Nachfahren relativ zueinander oder in sich verwinden. Insgesamt wird durch das erfindungsgemäße Verfahren der Wirkungsgrad eines Sonnenkollektors erhöht, beim Verfahren gemäß Ausführungsbeispiel wurde eine Erhöhung von 5-10 % ermittelt.

Um die selbstlernende Nachführung bzw. Nachführsteuerung auszuführen, ist die Steuereinheit mit einem Mikroprozessor und/oder einer Fuzzy-Logik-Einheit ausgestattet, in der zum einen die verfahrensmäßigen Optimierungsregeln hinterlegt sind und die zum anderen so verschaltet ist, dass die erhaltenen Sensorsignale entsprechend verarbeitet werden.

Alternativ können die inkrementellen oder dekrementellen Verstellschritte des jeweiligen Nachführparameters beim Feststellen einer erhöhten Wärmemenge oder Temperaturdifferenz auch solange in eine Richtung fortgesetzt und wiederholt werden, bis die Wärmemenge oder die Temperaturdifferenz wieder sinkt, d.h. bis das Maximum überschritten wird. Der letzte Wert des jeweiligen Nachführparameters vor dem Wieder-Absinken wird dann als neuer Sollwert abgespeichert.

## Patentansprüche

1. Verfahren zur Nachführsteuerung eines Sonnenkollektors (K₁, K₂, K₃, K₄) und/oder mehrerer in Reihe angeordneter Sonnenkollektoren (K₁, K₂, K₃, K₄), insbesondere Parabolrinnenkollektoren, mit jeweils in der Brennlinie angeordnetem Wärmesammelelement (10), wobei die Temperatur und/oder die gesammelte Wärmemenge des das Wärmesammelelement (10) durchströmenden Wärmeträgermediums im Bereich eines jeden Sonnenkollektors (K₁, K₂, K₃, K₄) diesem zuordenbar gemessen wird und die ermittelten Temperaturwerte (T₁, T₂, T₃, T₄; T'₁, T'₂, T'₃, T'₄, T'₅) und/oder Wärmemengenwerte einer die Nachführung des jeweiligen Sonnenkollektors (K₁, K₂, K₃, K₄) steuernden Steuereinheit zugeführt werden, die den jeweiligen Sonnenkollektor (K₁, K₂, K₃, K₄) im Rahmen eines festgelegten Nachführparameters, insbesondere eines Nachführbereiches und/oder Nachführhubes, der Sonne nachführt,
**dadurch gekennzeichnet,**
**dass** das Verfahren die folgenden Schritte umfasst:
a) Ermitteln der im jeweiligen Sonnenkollektor (K₁, K₂, K₃, K₄) gesammelten Wärmemenge;
b) Verändern eines Nachführparameters des jeweiligen Sonnenkollektors um ein Inkrement in Richtung der oder ein Dekrement entgegengesetzt zur Sonnenbewegung;
c) Vergleichen der im Schritt a) gesammelten Wärmemenge mit der nach Durchführung des Schrittes b) im jeweiligen Sonnenkollektor gesammelten Wärmemenge
und
d) bei im Schritt c) relativ zur im Schritt a) ermittelten Wärmemenge festgestellter erhöhter Wärmemenge Speichern des um das Inkrement oder das Dekrement geänderten Nachführparameters als neuen Sollwert für die Nachführsteuerung des jeweiligen Sonnenkollektors in der Steuereinheit.

2. Verfahren nach Anspruch 1, **dadurch gekennzeichnet, dass** im Falle des Feststellens einer erniedrigten Wärmemenge beim Vergleich im Schritt c) der Nachführparameter um zwei Dekremente oder zwei Inkremente in die entgegengesetzte Position verstellt wird.

3. Verfahren nach Anspruch 1 oder 2, **dadurch gekennzeichnet, dass** im Falle des Feststellens einer unveränderten Wärmemenge beim Vergleich im Schritt c) der Nachführparameter wieder auf seinen Ausgangswert vor Durchführung des Schrittes b) zurückgestellt wird.

4. Verfahren nach einem der vorhergehenden Ansprüche, **dadurch gekennzeichnet, dass** die gesammelte Wärmemenge jeweils mittels eines gleitenden Mittelwertes einer dem jeweiligen Sonnenkollektor (K₁, K₂, K₃, K₄) zugeordneten Temperaturdifferenz des Wärmeträgermediums ermittelt wird.

5. Verfahren nach einem der vorhergehenden Ansprüche, **dadurch gekennzeichnet, dass** als Nachführparameter der Nachführbereich und/oder der Nachführhub verwendet wird/werden.

6. Verfahren zur Nachführsteuerung eines Sonnenkollektors (K₁, K₂, K₃, K₄) und/oder mehrerer in Reihe angeordneter Sonnenkollektoren (K₁, K₂, K₃, K₄), insbesondere Parabolrinnenkollektoren, mit jeweils in der Brennlinie angeordnetem Wärmesammelelement (10), wobei die Temperatur und/oder die gesammelte Wärmemenge des das Wärmesammelelement (10) durchströmenden Wärmeträgermediums im Bereich eines jeden Sonnenkollektors (K₁, K₂, K₃, K₄) diesem zuordenbar gemessen wird und die ermittelten Temperaturwerte (T₁, T₂, T₃, T₄; T'₁, T'₂, T'₃, T'₄, T'₅) und/oder Wärmemengenwerte einer die Nachführung des jeweiligen Sonnenkollektors (K₁, K₂, K₃, K₄) steuernden Steuereinheit zugeführt werden, die den jeweiligen Sonnenkollektor (K₁, K₂, K₃, K₄) im Rahmen eines festgelegten Nachführparameters, insbesondere eines Nachführbereiches und/oder Nachführhubes, der Sonne nachführt, wobei mehrere in Reihe angeordnete Sonnenkollektoren (K₁, K₂, K₃, K₄) zusammenwirken, **dadurch gekennzeichnet, dass** das Verfahren die folgenden Schritte umfasst:
a1) Ermitteln eines gleitenden Mittelwertes einer ersten, einem ersten Sonnenkollektor zugeordneten Temperaturdifferenz des Wärmeträgermediums zwischen einem ersten und einem zweiten Temperaturmesspunkt;
a2) Ermitteln eines gleitenden Mittelwertes einer zweiten, einem anderen Sonnenkollektor zugeordneten Temperaturdifferenz des Wärmeträgermediums zwischen zwei Temperaturmesspunkten, wovon mindestens einer unterschiedlich zum ersten und/oder zweiten Temperaturmesspunkt ist;
b1) Verändern des Nachführparameters, insbesondere des Nachführbereiches und/oder des Nachführhubes, des ersten Sonnenkollektors um ein Inkrement in Richtung der oder ein Dekrement entgegengesetzt zur Sonnenbewegung;
c1) Vergleichen der sich danach einstellenden leitenden Mittelwerte von erster und zweiter Temperaturdifferenz
und
d1) bei relativ zum gleitenden Mittelwert der zweiten Temperaturdifferenz erhöhtem gleitendem Mittelwert der ersten Temperaturdifferenz Speichern des um das Inkrement oder das Dekrement geänderten Nachführparameters, insbesondere Nachführbereiches und/oder Nachführhubes, als neuen Sollwert für die Nachführsteuerung des ersten Sonnenkollektors in der Steuereinheit.

7. Verfahren nach Anspruch 6, **dadurch gekennzeichnet, dass** im Falle des Feststellens eines relativ zum gleitenden Mittelwert des zweiten Sonnenkollektors erniedrigten gleitenden Mittelwertes der ersten Temperaturdifferenz beim Vergleich im Schritt c1) der Nachführparameter, insbesondere der Nachführbereich und/oder der Nachführhub, des ersten Sonnenkollektors um zwei Dekremente oder zwei Inkremente in die entgegengesetzte Richtung verstellt wird.

8. verfahren nach Anspruch 6 oder 7, **dadurch gekennzeichnet, dass** im Falle des Feststellens eines relativ zum gleitenden Mittelwert des zweiten Sonnenkollektors unveränderten gleitenden Mittelwertes der ersten Temperaturdifferenz beim Vergleich im Schritt c1) der Nachführparameter, insbesondere der Nachführbereich und/oder der Nachführhub, des ersten Sonnenkollektors wieder auf seinen Ausgangswert vor Durchführung des Schrittes b1) zurückgestellt wird.

9. Verfahren nach einem der Ansprüche 6-8, **dadurch gekennzeichnet, dass** bei mehr als zwei Sonnenkollektoren nacheinander jeder Sonnenkollektor mindestens einmal als erster Sonnenkollektor geschaltet wird und der gleitende Mittelwert der jeweils zugeordneten Temperaturdifferenz mit dem gleitenden Mittelwert der jeweils mindestens einem anderen Sonnenkollektor zugeordneten Temperaturdifferenz verglichen wird.

10. Verfahren nach Anspruch 1 oder 6, **dadurch gekennzeichnet, dass** bei Feststellen einer erhöhten Wärmemenge im Schritt c) oder bei Feststellen einer erhöhten Temperaturdifferenz im Schritt c1) solange eine nochmalige oder mehrmalige inkrementelle oder dekrementelle Verstellung des jeweiligen Nachführparameters in dieselbe Richtung erfolgt, bis wieder ein Absinken der Wärmemenge oder der Temperaturdifferenz festgestellt wird, wobei dann der jeweils letzte Wert des Nachführparameters vor dem Wieder-Absinken der Wärmemenge oder der Temperaturdifferenz als neuer Sollwert für die Nachführsteuerung des jeweiligen Sonnenkollektors (K₁, K₂, K₃, K₄) gespeichert wird.

11. Verfahren nach einem der vorhergehenden Ansprüche, **dadurch gekennzeichnet, dass** die einzelnen Verfahrensschritte von der -vorzugsweise einen Mikroprozessor umfassenden- Steuereinheit und/oder einer dieser zugeordneten Fuzzy-Logik-Einheit eine selbstlernende Nachführsteuerung ausbildend vorzugsweise automatisiert durchgeführt werden.

12. Verfahren nach einem der vorhergehenden Ansprüche, **dadurch gekennzeichnet, dass** die jeweilige relative Schwenkposition eines jeden Sonnenkollektors relativ um seine Längsachse (8) mittels eines Winkelpositionssensors ermittelt wird.

13. Verfahren nach einem der vorhergehenden Ansprüche, **dadurch gekennzeichnet, dass** die jeweilige relative Position eines jeden Sonnenkollektors zur Sonne mittels eines Sonnensensors ermittelt wird.

## Claims

1. A method for tracking control of a solar collector (K₁, K₂, K₃, K₄) and/or of several solar collectors (K₁, K₂, K₃, K₄) arranged in series, especially parabolic-trough collectors, with a heat accumulator element (10) arranged in the respective focal line,
wherein the temperature and/or the accumulated quantity of heat of the thermal-transfer medium flowing through the heat accumulator element is measured in the region of every solar collector (K₁, K₂, K₃, K₄) in a manner capable of being allocated to the latter,
and the determined temperature values (T₁, T₂, T₃, T₄; T'₁, T'₂, T'₃, T'₄, T'₅) and/or quantity of heat values are supplied to a control unit controlling the tracking of the respective solar collector (K₁, K₂, K₃, K₄), which tracks the respective solar collector (K₁, K₂, K₃, K₄) to the sun within the framework of a fixed tracking parameter, especially a tracking range or tracking travel,
**characterised in that**
the method comprises the following steps:
a) determination of the quantity of heat accumulated in the respective solar collector (K₁, K₂, K₃, K₄);
b) variation of a tracking parameter of each solar collector by an increment in the direction of the movement of the sun or by a decrement in the direction opposite to the movement of the sun;
c) comparison of the quantity of heat accumulated in step a) with the quantity of heat accumulated in the respective solar collector after the implementation of step b) and,
d) in the event of an increase in the measured quantity of heat in step c) relative to the quantity of heat determined in step a), a buffering of the tracking parameter modified by the increment or the decrement as a new target value in the control unit for the tracking control of the respective solar collector.

2. The method according to claim 1,
**characterised in that,**
in the event of the determination of a reduced quantity of heat in the comparison in step c), the tracking parameter is adjusted into the opposite position by two decrements or two increments.

3. The method according to claim 1 or 2,
**characterised in that,**
in the event of the determination of an un-changed quantity of heat in the comparison in step c), the tracking parameter is restored again to its starting value before the implementation of step b),

4. The method according to any one of the preceding claims,
**characterised in that**
the accumulated quantity of heat is determined in each case using a sliding-mean value of a temperature difference of the thermal-transfer medium allocated to the respective solar collector (K₁, K₂, K₃, K₄).

5. The method according to any one of the preceding claims,
**characterised in that**
the tracking range and/or the tracking travel is/are used as tracking parameters.

6. A method for tracking control of a solar collector (K₁, K₂, K₃, K₄) and/or of several solar collectors (K₁, K₂, K₃, K₄) arranged in series, especially parabolic-trough collectors, with a heat accumulator element (10) arranged in the respective focal line,
wherein the temperature and/or the accumulated quantity of heat of the thermal-transfer medium flowing through the heat accumulator element (10) is measured in the region of every solar collector (K₁, K₂, X₃, K₄) in a manner capable of being allocated to the latter,
and the determined temperature values (T₁, T₂, T₃, T₄; T'₁, T'₂, T'₃, T'₄, T'₅) and/or quantity of heat values are supplied to a control unit controlling the tracking of the respective solar collector (K₁, K₂, K₃, K₄), which tracks the respective solar collector (K₁, K₂, K₃, K₄) to the sun, within the framework of a fixed tracking parameter, especially a tracking range and/or tracking travel,
wherein several solar collectors (K₁, K₂, K₃, K₄) arranged in series co-operate,
**characterised in that**
the method comprises the following steps:
a1) determination of a sliding-mean value of a first temperature difference of the thermal-transfer medium allocated to a first solar collector between a first and a second temperature measurement point;
a2) determination of a sliding-mean value of a second temperature difference of the thermal-transfer medium between two temperature measurement points allocated to another solar collector, of which at least one is different from the first and/or second temperature measuring point;
b1) variation of the tracking parameter, especially the tracking range and/or tracking travel, of the first solar collector by an increment in the direction of the movement of the sun or by a decrement in the direction opposite to the movement of the sun;
c1) comparison of the sliding-mean values of the first and second temperature difference adjusted after this
and
d1) in the event of an increased sliding-mean value of the first temperature difference relative to the sliding-mean value of the second temperature difference, a buffering of the tracking parameter modified by the increment or the decrement, especially the tracking range and/or tracking travel, as a new target value in the control unit for the tracking control of the first solar collector.

7. The method according to claim 6,
**characterised in that,**
in the event of the determination of a reduced sliding-mean value of the first temperature difference in the comparison in step c1) relative to the sliding-mean value of the second solar collector, the tracking parameter, especially the tracking range and/or tracking travel, of the first solar collector is adjusted in the opposite direction by two decrements or two increments.

8. The method according to claim 6 or 7,
**characterised in that,**
in the event of the determination of an un-changed sliding-mean value of the first temperature difference in the comparison in step c1) relative to the sliding-mean value of the second solar collector, the tracking parameter, especially the tracking range and/or tracking travel, of the first solar collector is restored again to its starting value before the implementation of step b1).

9. The method according to any one of claims 6 - 8,
**characterised in that,**
with more than two solar collectors in succession, each solar collector is connected at least once as the first solar collector, and the sliding-mean value of the respectively allocated temperature difference is compared respectively with the sliding-mean value of the temperature difference allocated to at least one other solar collector.

10. The method according to claim 1 or 6,
**characterised in that,**
in the event of the determination of an increased quantity of heat in step c), or in the event of the determination of an increased temperature difference in step c1), a repeated or multiple incremental or decremental adjustment of the respective tracking parameter in the same direction is implemented, until a lowering of the quantity of heat or of the temperature difference is determined again, wherein, in each case, the last value of the tracking parameter before the re-lowering of the quantity of heat or of the temperature difference is buffered as the new target value for the tracking control of the respective solar collector (K₁, K₂, K₃, K₄).

11. The method according to any one of the preceding claims,
**characterised in that**
the individual method steps are preferably implemented in an automated manner by the control unit - preferably comprising a microprocessor - and/or by a fuzzy logic unit allocated to the latter, thereby forming a self-learning tracking control.

12. The method according to any one of the preceding claims,
**characterised in that**
the respective, relative rotational position of each solar collector is determined relative to its longitudinal axis (8) by means of an angular-position sensor.

13. The method according to any one of the preceding claims,
**characterised in that**
the respective, relative position of every solar collector relative to the sun is determined by means of a solar sensor.

## Revendications

1. Procédé de commande d'orientation d'un capteur solaire (K1, K₂, K₃, K₄) et/ou de plusieurs capteurs solaires (K₁, K₂, K₃, K₄) agencés en ligne, en particulier de capteurs cylindro-paraboliques, comprenant respectivement un élément collecteur de chaleur (10) agencé dans la ligne focale, dans lequel la température et/ou la quantité de chaleur recueillie du fluide caloporteur parcourant l'élément collecteur de chaleur (10) dans la zone de chacun des capteurs solaires respectif (K₁, K₂, K₃, K₄) est ou sont mesurées individuellement et les valeurs de température (T₁, T₂, T₃, T₄ ; T'₁, T'₂, T'₃, T'₄, T'₅) et/ou les valeurs de quantité de chaleur établies sont acheminées vers une unité de commande commandant l'orientation du capteur solaire respectif (K₁, K₂, K₃, K₄) par rapport au soleil, qui oriente le capteur solaire respectif (K₁, K₂, K₃, K₄) en tenant compte d'un paramètre fixe d'orientation, en particulier d'une plage d'orientation et/ou d'une course d'orientation, du soleil,
**caractérisé en ce que**
le procédé comprend les étapes suivantes consistant à :
a) établir la quantité de chaleur recueillie dans le capteur solaire respectif (K₁, K₂, K₃, K₄) ;
b) modifier un paramètre d'orientation du capteur solaire respectif d'un incrément dans le sens de déplacement du soleil ou d'un décrément dans le sens opposé au déplacement du soleil ;
c) comparer la quantité de chaleur recueillie à l'étape a) à la quantité de chaleur recueillie après réalisation de l'étape b) dans le capteur solaire respectif, et,
d) lorsque la quantité de chaleur déterminée à l'étape c) est plus élevée que la quantité de chaleur établie à l'étape a), mémoriser le paramètre d'orientation modifié par l'incrément ou le décrément en tant que nouvelle valeur théorique pour la commande d'orientation du capteur solaire respectif dans l'unité de commande.

2. Procédé selon la revendication 1, **caractérisé en ce que**, dans le cas de la détermination d'une quantité de chaleur plus faible lors de la comparaison de l'étape c), le paramètre d'orientation est déplacé de deux décréments ou de deux incréments dans la position opposée.

3. Procédé selon la revendication 1 ou 2, **caractérisé en ce que**, dans le cas du constat d'une quantité de chaleur non modifiée lors de la comparaison de l'étape c), le paramètre d'orientation est à nouveau ramené à sa valeur initiale avant réalisation de l'étape b).

4. Procédé selon l'une quelconque des revendications précédentes, **caractérisé en ce que** la quantité de chaleur recueillie est établie respectivement au moyen d'une valeur moyenne mobile d'une différence de température du fluide caloporteur, ladite différence de température étant respective à chacun des capteurs solaires (K₁, K₂, K₃, K4).

5. Procédé selon l'une quelconque des revendications précédentes, **caractérisé en ce que** l'on utilise comme paramètre d'orientation la plage d'orientation et/ou la course d'orientation.

6. Procédé de commande d'orientation d'un capteur solaire (K₁, K₂, K₃, K₄) et/ou de plusieurs capteurs solaires (K₁, K₂, K₃, K₄) agencés en ligne, en particulier de capteurs cylindro-paraboliques, comprenant respectivement un élément collecteur de chaleur (10) agencé dans la ligne focale, dans lequel la température et/ou la quantité de chaleur recueillie du fluide caloporteur traversant l'élément collecteur de chaleur (10) dans la zone de chacun des capteurs solaires (K1, K₂, K₃, K₄) est ou sont mesurées individuellement et les valeurs de température (T₁, T₂, T₃, T₄; T'₁, T'₂, T'₃, T'₄, T'₅) et/ou les valeurs de quantité de chaleur établies sont acheminées vers une unité de commande comandant l'orientation du capteur solaire respectif (K₁, K₂, K₃, K₄), qui ajuste le capteur solaire respectif (K₁, K₂, K₃, K₄) par rapport au soleil en tenant compte d'un paramètre fixe d'orientation, en particulier une plage d'orientation et/ou une course d'orientation, du soleil, dans lequel plusieurs capteurs solaires (K1, K₂, K₃, K4) agencés en ligne coopèrent, **caractérisé en ce que** le procédé comprend les étapes suivantes consistant à :
a1) établir une valeur moyenne mobile d'une première différence de température du fluide caloporteur entre un premier point de mesuré la température et un second point de mesure de la température, ladite différence de température étant affectée à un premier capteur solaire ;
a2) établir une valeur moyenne mobile d'une seconde différence de température du fluide caloporteur entre deux points de mesure de la température, dont au moins l'un est différent du premier point de mesure de la température et/ou du second point de mesure de la température, ladite différence de température étant affectée à un autre capteur solaire ;
b1) modifier le paramètre d'orientation, en particulier la plage d'orientation et/ou la course d'orientation, du premier capteur solaire d'un incrément dans le sens du déplacement du soleil ou d'un décrément dans le sens opposé au déplacement du soleil;
c1) comparer les valeurs moyennes mobiles nouvellement établies pour la première et la seconde différence de température, et,
d1) lorsque la valeur moyenne mobile de la première différence de température est plus élevée que la valeur moyenne mobile de la seconde différence de température, mémoriser le paramètre d'orientation modifié par l'incrément ou le décrément, en particulier la plage d'orientation et/ou la course d'orientation, en tant que nouvelle valeur théorique pour la commande d'orientation du premier capteur solaire dans l'unité de commande

7. Procédé selon la revendication 6, **caractérisé en ce que**, dans le cas de la détermination d'une valeur moyenne mobile de la première différence de température plus basse que la valeur moyenne mobile du second capteur solaire lors de la comparaison de l'étape c1), le paramètre d'orientation, en particulier la plage d'orientation et/ou la course d'orientation, du premier capteur solaire est corrigé de deux décréments ou de deux incréments dans le sens opposé.

8. Procédé selon la revendication 6 ou 7, **caractérisé en ce que**, dans le cas du constat d'une valeur moyenne mobile de la première différence de température non modifiée par rapport à la valeur moyenne mobile du second capteur solaire lors de la comparaison de l'étape c1), le paramètre d'orientation, en particulier la plage d'orientation et/ou la course d'orientation, du premier capteur solaire est à nouveau ramené à sa valeur initiale avant réalisation de l'étape b1).

9. Procédé selon l'une quelconque des revendications 6 à 8, **caractérisé en ce que**, pour plus de deux capteurs solaires qui se suivent, chaque capteur solaire est raccordé au moins une fois en tant que premier capteur solaire et **en ce que** la valeur moyenne mobile de la différence de température respectivement attribuée est comparée à la valeur moyenne mobile de la différence de température respectivement attribuée à au moins un autre capteur solaire.

10. Procédé selon la revendication 1 ou 6, **caractérisé en ce que**, lors du constat d'une quantité de chaleur plus élevée à l'étape c) ou lors du constat d'une différence de température plus élevée à l'étape c1), tant qu'un déplacement incrémentiel ou décrémentiel réitéré une ou plusieurs fois du paramètre d'orientation respectif s'effectue dans le même sens jusqu'à constater à nouveau une baisse de la quantité de chaleur ou de la différence de température, dans lequel la dernière valeur respective du paramètre d'orientation est ensuite mémorisée avant la nouvelle baisse de la quantité de chaleur ou de la différence de température en tant que nouvelle valeur théorique pour la commande de poursuite du capteur solaire respectif (K₁, K₂, K₃, K₄).

11. Procédé selon l'une quelconque des revendications précédentes, **caractérisé en ce que** les étapes de procédé individuelles sont réalisées de préférence de manière automatisée par l'unité de commande - comprenant de préférence un microprocesseur - et/ou par une unité à logique floue affectée à celle-ci en formant une commande d'orientation auto-apprenante.

12. procédé selon l'une quelconque des revendications précédentes, **caractérisé en ce que** la position de pivotement relative respective de chaque capteur solaire par rapport à son axe longitudinal (8) est établie au moyen d'un capteur de position angulaire.

13. Procédé selon l'une quelconque des revendications précédentes, **caractérisé en ce que** la position relative respective de chacun des capteurs solaires par rapport au soleil est établie au moyen d'un capteur solaire.
